# EUROPÄISCHE PATENTANMELDUNG

(11) **EP 2 781 690 A1**
(43) Veröffentlichungstag der Anmeldung: **24.09.2014**
(21) Anmeldenummer: 13160197.3
(22) Anmeldetag: 20.03.2013
(51) Int. Cl.: F01D 1/02, F16K 39/02, F01D 17/14

(54) **Ventil für eine Dampfturbine**

(71) Anmelder: Siemens Aktiengesellschaft, 80333 München (DE)
(72) Erfinder: Sievert, Roland, 40885 Ratingen (DE); Wechsung, Michael, 45470 Mülheim an der Ruhr (DE)

(57) **Zusammenfassung**

Die Erfindung betrifft ein Ventil (20) für eine Dampfturbine (3), wobei ein Überlastventil entfallen kann, indem das Ventil (20) derart ausgebildet wird, dass nunmehr ein Drei-WegeVentil entsteht, wobei der Ventilkegel (24) derart ausgeführt wird, dass eine dritte Leitung als Überströmleitung geöffnet und geschlossen werden kann.

## Beschreibung

Die Erfindung betrifft ein Ventil für eine Dampfturbine umfassend ein Ventilgehäuse, ein Ventilinnengehäuse, eine Ventilstange, einen Ventilkegel, einen Ventil-Steuerkolben.

Schnellschluss-Stellventilkombinationen werden bei Dampfturbinen insbesondere als Hoch- und/oder Mitteldruckventilanordnungen verwendet. Sie weisen jeweils ein Schnellschlussventil mit einem nachgeschalteten Stellventil auf. Um die Schluckfähigkeit einer Dampfturbine zu erhöhen ist es üblicherweise vorgesehen, eine zusätzliche Einleitung von Frischdampf in den Beschaufelungskanal stromab der ersten Stufen zu ermöglichen. Nach dem derzeitigen Stand der Technik wird hierbei eine Frischdampfleitung mit einem Schnellschlussventil und einem Regelventil ausgebildet. Zwischen dem Schnellschlussventil und dem Regelventil ist eine Abzweigung angeordnet, die mit einer stromab liegenden Einleitung nach der ersten Stufe strömungstechnisch gekoppelt ist. In dieser Ableitung ist ein weiteres Ventil angeordnet, das den Durchfluss in die Einleitung regelt. Diese Einleitung wird herkömmlicherweise Überlasteinleitung, Stufenbypass oder Stufenventil genannt. Bei der Überlasteinleitung wird eine Kombination aus Schnellschluss- und Stellventil benötigt.

Dieses zusätzliche Ventil besitzt beachtliche Abmaße und ist dadurch auch sehr kostenintensiv.

Wünschenswert wäre es, eine Möglichkeit zu haben, auf ein separates Ventil zu verzichten.

Die Erfindung hat es sich daher zur Aufgabe gemacht, ein Ventil auszubilden, mit dem das zusätzliche Überlastventil entfallen kann.

Gelöst wird diese Aufgabe durch ein Ventil gemäß Anspruch 1.

Somit wird die Aufgabe durch ein Ventil für eine Dampfturbine umfassend ein Ventilgehäuse, ein Ventilinnengehäuse, eine Ventilstange, einen Ventilkegel, einen Ventil-Steuerkolben, wobei das Ventilinnengehäuse innerhalb des Ventilgehäuses angeordnet ist, wobei der Ventilkegel mit einer Endseite der Ventilstange verbunden ist, wobei auf der Ventilstange der Ventil-Steuerkolben angeordnet ist, wobei der Ventilkegel verschiebbar gegenüber einem im Ventilgehäuse angeordneten Ventilsitz ausgebildet ist, wobei das Ventilgehäuse eine Dampfeinlass-Öffnung und eine Dampfauslass-Öffnung aufweist, wobei die Dampfeinlass-Öffnung und die Dampfauslass-Öffnung strömungstechnisch miteinander verbunden ist und der Ventilkegel und der Ventilsitz derart ausgebildet sind, dass die strömungstechnische Verbindung zwischen der Dampfeinlass-Öffnung und der Dampfauslass-Öffnung trennbar ist, wobei das Ventilgehäuse eine Überlast-Einleitungs-Öffnung aufweist, die strömungstechnisch mit der Dampfeinlass-Öffnung verbunden ist, wobei der Ventil-Steuerkolben und das Ventilinnengehäuse derart ausgebildet sind, dass die strömungstechnische Verbindung zwischen der Überlast-Einleitungs-Öffnung und der Dampfeinlass-Öffnung trennbar ist, gelöst.

Die Erfindung geht von dem Aspekt aus, dass das zusätzliche Überlastventil, das derzeit gemäß dem Stand der Technik berücksichtigt und ausgebildet wird, entfallen kann, wenn die Überlastleitung in einem Regelventil angeordnet werden kann. Dafür kann ein bereits eingesetztes Regelventil verwendet werden, das erfindungsgemäß geändert werden muss, um die oben genannte Aufgabe zu lösen.

Im Wesentlichen umfassen diese Änderungen eine im Ventilgehäuse angeordnete Überlast-Einleitungs-Öffnung. Über diese Überlast-Einleitungs-Öffnung wird der Dampf strömungstechnisch mit der Dampfeinlass-Öffnung verbunden. Somit kann der Dampf nicht nur über die Hauptdampfrichtung vor die erste Stufe in die Dampfturbine geführt werden, sondern bereits innerhalb des Ventils abgezweigt und über die Überlast-Einleitungs-Öffnung, die im Ventilgehäuse angeordnet ist, zu einer stromab liegenden Stufe geführt werden.

Erfindungsgemäß wird dies dadurch ermöglicht, dass das Ventil eine Ventilstange aufweist und auf dieser Ventilstange ein Ventil-Steuerkolben sowie ein Ventilkegel angeordnet sind. Der Ventilkegel ist über die Ventilstange bewegbar ausgebildet und schließt und öffnet das Ventil wie im Stand der Technik häufig beschrieben ist. Dem Ventil-Steuerkolben kommt eine besondere Funktion zu. Der Ventil-Steuerkolben und das Ventilinnengehäuse ist im geschlossenen Zustand des Ventils, d. h. der Ventilkegel ist am Ventilsitz angeordnet, so dass kein Dampf durchströmen kann, derart angeordnet und ausgebildet, dass die strömungstechnische Verbindung zwischen der Überlast-Einleitungs-Öffnung und der Dampfeinlass-Öffnung trennbar ist, wobei das Ventilgehäuse eine Überlast-Einleitungs-Öffnung aufweist, die strömungstechnisch mit der Dampfeinlass-Öffnung verbunden ist. Somit wird der neue Weg eingeschlagen, das Ventil, das vorher im Grunde nur einen Dampfeinlass und einen Dampfauslass aufwies, derart verändert, dass nunmehr ein Dreiwegeventil entstanden ist, das neben dem Dampfeinlass und dem Dampfauslass auch eine Überlast-Einleitungs-Öffnung aufweist, wobei die Dampfströmung durch diese Überlast-Einleitungs-Öffnung durch Bewegen der Ventilstange und des Ventil-Steuerkolbens geregelt ist.

In den Unteransprüchen sind vorteilhafte Weiterbildungen angegeben.

In einer ersten vorteilhaften Weiterbildung ist das Ventil derart ausgebildet, dass die strömungstechnische Verbindung zwischen der Dampfeinlass-Öffnung und der Überlast-Einleitungs-Öffnung dann besteht, wenn die strömungstechnische Verbindung zwischen der Dampfeinlass-Öffnung und der Dampfauslass-Öffnung besteht. Somit ist Ventildurchflussregelung durch die Dampfauslass-Öffnung und der Überlast-Einleitungs-Öffnung miteinander korreliert. Das bedeutet, dass die Steuerstange, der Ventil-Steuerkolben sowie der Ventilkegel derart ausgebildet sind, dass ein Öffnen des Ventils, das einhergeht mit der Bewegung der Ventilstange und des Ventilkegels weg vom Ventilsitz ebenfalls zu einer Öffnung der Überlast-Einleitungs-Öffnung ermöglicht.

Dazu ist vorteilhafterweise die Ventilstange, der Ventil-Steuerkolben und der Ventilkegel innerhalb des Ventilinnengehäuses verschiebbar angeordnet.

In einer vorteilhaften Weiterbildung weist das Ventilinnengehäuse einen Überlast-Einleitungskanal auf, der im Ventilinnengehäuse angeordnet ist. Dieser Überlast-Einleitungskanal ist durch den Ventil-Steuerkolben verdeckbar. Das bedeutet, dass die Durchtrittsöffnung durch den Überlast-Einleitungs-Kanal durch den Ventil-Steuerkolben geregelt werden kann und somit über eine Bewegung der Ventilstange korreliert ist. Der Überlast-Einleitungs-Kanal ist strömungstechnisch mit der Überlast-Einleitungs-Öffnung verbunden.

Vorteilhafterweise ist der Ventil-Steuerkolben und der Ventilkegel starr mit der Ventilstange verbunden. Das bedeutet, dass eine mechanische Kopplung zwischen der Ventilstange und dem Ventil-Steuerkolben und dem Ventilkegel derart besteht, dass eine Bewegung der Ventilstange zwangsläufig zu einer Bewegung des Ventil-Steuerkolbens und des Ventilkegels führt.

Die Erfindung wird nun anhand eines Ausführungsbeispiels näher erläutert.

Die Figuren zeigen in schematischer Weise:
- FIG 1: eine Übersicht eines Teils der Dampfzuführung mit Überlast-Einleitung gemäß dem Stand der Technik;
- FIG 2: eine erfindungsgemäße Ausführung des Ventils in einer Schnittdarstellung im geschlossenen Zustand;
- FIG 3: das Ventil gemäß FIG 2 in geöffneter Stellung;
- FIG 4: eine alternative Ausführungsform des erfindungsgemäßen Ventils im geschlossenen Zustand;
- FIG 5: das Ventil gemäß FIG 4 im geöffneten Zustand.

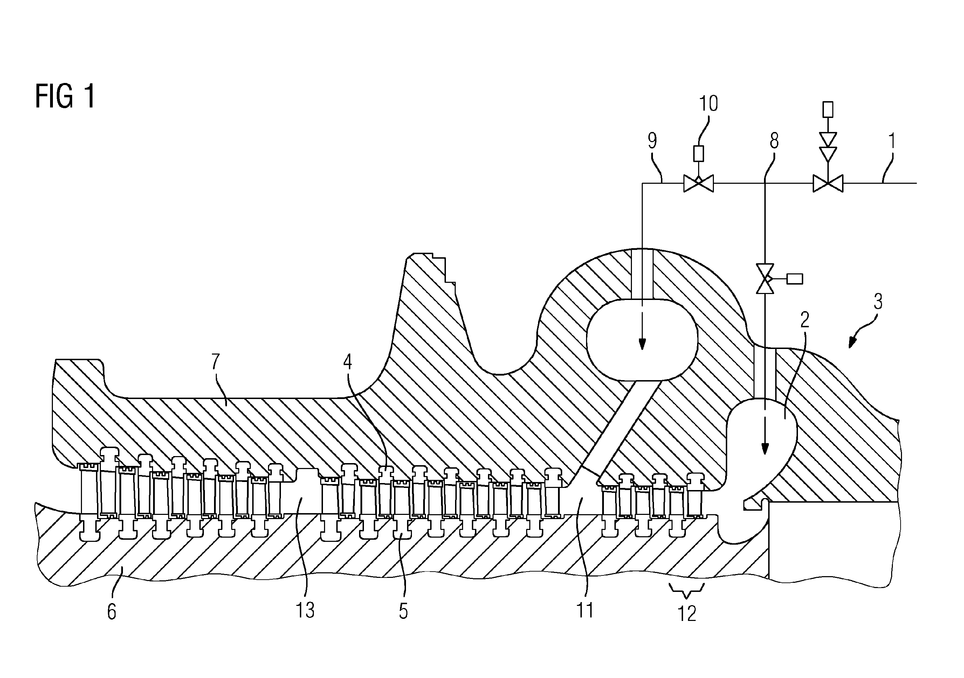

Die FIG 1 zeigt eine Ausführung der Ventilanbindung gemäß dem Stand der Technik. Hierbei wird Frischdampf über eine Frischdampfleitung 1 zu der Einströmöffnung 2 einer Dampfturbine 3 strömungstechnisch gekoppelt. Die Dampfturbine 3 umfasst mehrere mit Laufschaufeln 4 und Leitschaufeln 5 ausgebildete Stufen auf, wobei lediglich eine Leitschaufel und eine Laufschaufel mit Bezugszeichen versehen sind. Der über den Frischdampfeinlass 2 einströmende Dampf strömt zwischen die Laufschaufeln 4 und Leitschaufeln 5, entspannt sich dabei und kühlt ab. Die thermische Energie des Dampfes wird letztendlich in Rotationsenergie eines Rotors 6 der Dampfturbine umgewandelt. Um den Rotor 6 ist ein Gehäuse 7 angeordnet.

Um die Schluckfähigkeit zu erhöhen weist die Frischdampfleitung 1 eine Abzweigung 8 auf, die strömungstechnisch mit einer Überlasteinleitung 9 verbunden ist. Diese Überlasteinleitung 9 wird ebenso als Stufenbypass oder Stufenventil bezeichnet. In dieser Überlastleitung 9 ist ein Überlastventil 10 angeordnet. Der durch die Überlasteinleitung 9 strömende Dampf strömt schließlich in eine Überlaststufe 11, die stromab der ersten Stufe 12 liegt in den Strömungskanal 13.

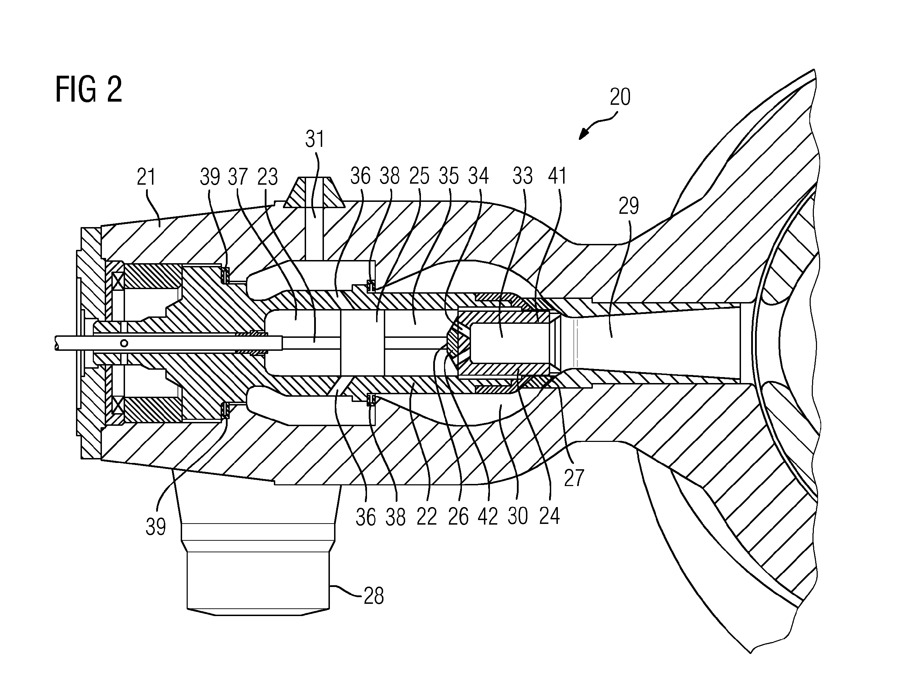

Die FIG 2 zeigt eine erfindungsgemäße Darstellung des Ventils 20 in einer Schnittdarstellung. Das Ventil 20 umfasst ein Ventilgehäuse 21, ein Ventilinnengehäuse 22 sowie eine Ventilstange 23 und einen Ventilkegel 24 und einen Ventil-Steuerkolben 25. Das Ventilinnengehäuse 22 ist innerhalb des Ventilgehäuses 21 angeordnet. Der Ventilkegel 24 ist mit einer Endseite 26 mit der Ventilstange 23 verbunden. Auf der Ventilstange 23 ist der Ventil-Steuerkolben 25 angeordnet, wobei der Ventilkegel 24 verschiebbar gegen einen im Ventilgehäuse 21 angeordneten Ventilsitz 27 ausgebildet ist.

Das Ventilgehäuse 21 umfasst eine Dampfeinlass-Öffnung 28 und eine Dampfauslass-Öffnung 29. Über die Dampfeinlass-Öffnung 28 strömt ein Dampf und sammelt sich in einem ersten Raum 30, der zwischen dem Ventilinnengehäuse 22 und dem Ventilgehäuse 21 angeordnet ist. Der Dampf kann durch die Dampfauslass-Öffnung 29 strömen, wenn zwischen dem Ventilkegel 24 und dem Ventil 27 ein Spalt über die Ventilstange 23 ermöglicht ist.

Die Dampfeinlass-Öffnung 28 und die Dampfauslass-Öffnung 29 ist strömungstechnisch miteinander verbunden, wobei der Ventilkegel 24 und der Ventilsitz 27 derart ausgebildet sind, dass die strömungstechnische Verbindung zwischen der Dampfeinlass-Öffnung 28 und der Dampfauslass-Öffnung 29 trennbar ist. Das Ventilgehäuse 21 umfasst eine Überlast-Einleitungs-Öffnung 31, die strömungstechnisch mit der Dampfeinlass-Öffnung 28 verbunden ist. Der Ventil-Steuerkolben 25 und das Ventilinnengehäuse 22 sind derart ausgebildet, dass die strömungstechnische Verbindung zwischen der Überlast-Einleitungs-Öffnung 31 und der Dampfeinlass-Öffnung 28 trennbar ist.

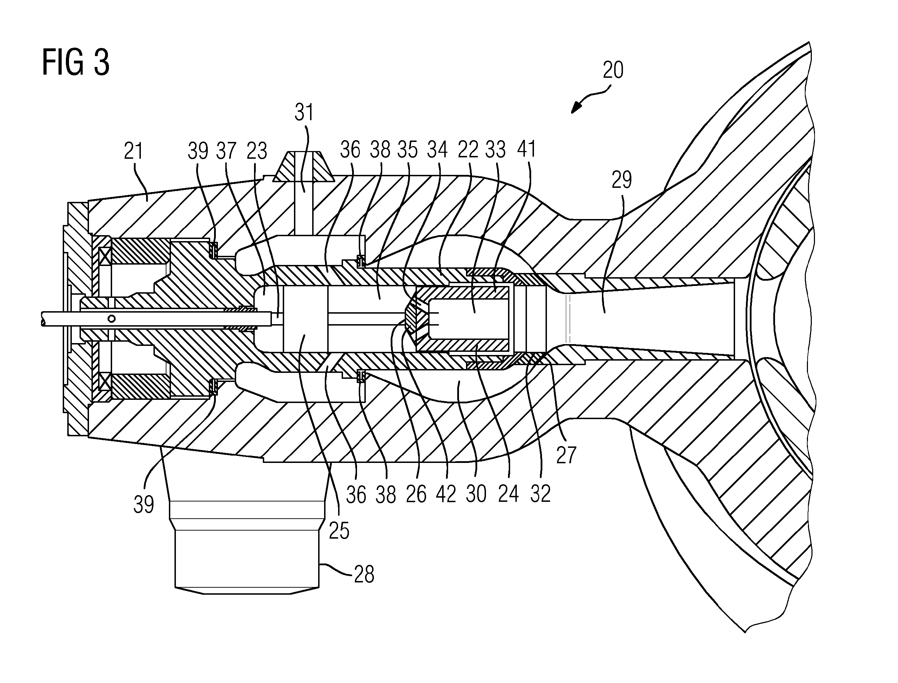

In der FIG 3 ist das Ventil gemäß FIG 2 in einer geöffneten Stellung zu erkennen. Das bedeutet, dass die Ventilstange 23 mitsamt Ventil-Steuerkolben 25 und Ventilkegel 24 in der Zeichenrichtung nach links verschoben ist. Dadurch öffnet sich ein Spalt 32 zwischen Ventilsitz 27 und Ventilkegel 24. Dadurch ist eine strömungstechnische Verbindung zwischen der Dampfeinlass-Öffnung 28 über den ersten Raum 30 zur Dampfauslass-Öffnung 29 ermöglicht. Zusätzlich entsteht eine strömungstechnische Verbindung zwischen dem ersten Raum 30 und einem zweiten Raum 33, der innerhalb des Ventilkegels 24 angeordnet ist. Dieser zweite Raum 33 ist über einen im Ventilkegel 24 angeordneten Ventilkolbenkanal 34 mit einem Zwischenraum 35 verbunden. Der Ventilkolbenkanal 34 ist strömungstechnisch mit der Dampfauslass-Öffnung 29 verbunden.

Des Weiteren umfasst das Ventilinnengehäuse einen Überlast-Einleitungskanal 36. Dieser Überlast-Einleitungskanal 36 ist strömungstechnisch mit dem Zwischenraum 35 verbunden. Des Weiteren ist der Überlast-Einleitungskanal 36 strömungstechnisch mit einem dritten Raum 37, der zwischen dem Ventilinnengehäuse 22 und dem Ventilgehäuse 21 angeordnet ist.

In der in der FIG 2 dargestellten Stellung der Ventilstange 23 ist der Überlast-Einleitungskanal 36 mit dem Ventil-Steuerkolben 25 verdeckt, so dass keine strömungstechnische Verbindung zwischen dem Zwischenraum 35 und der Überlast-Einleitungs-Öffnung 31 entsteht.

Erst wenn, wie in FIG 3 dargestellt, die Ventilstange 23 den Ventilkegel 24 ein großes Stück vom Ventil 27 abhebt, über die volle Öffnung hinaus, gelangt Dampf in den zweiten Raum 33 und von dort über den Ventilkolbenkanal 34 in den Zwischenraum 35 und von dort, da der Ventil-Steuerkolben 25 den Überlast-Einleitungskanal 36 nicht mehr verdeckt, in den dritten Raum 37 und von dort in die Überlast-Einleitungs-Öffnung 31 und von dort in eine Stufe der Dampfturbine, die stromab der ersten Stufe angeordnet ist.

Der dritte Raum 37 ist über eine erste Dichtung 38 gegenüber dem ersten Raum 30 abgedichtet. Das Ventilinnengehäuse 22 ist gegenüber dem Ventilgehäuse 21 über eine zweite Dichtung 39 abgedichtet. Das Ventil ist somit derart ausgebildet, dass die strömungstechnische Verbindung zwischen der Dampfeinlass-Öffnung 28 und der Überlast-Einleitungs-Öffnung 31 dann besteht, wenn die strömungstechnische Verbindung zwischen der Dampfeinlass-Öffnung und der Dampfauslass-Öffnung besteht, was mit einer Bewegung des Ventilkolbens 24 gegenüber dem Ventilsitz 27 zusammenhängt. Dazu ist die Ventilstange 23, der Ventil-Steuerkolben 25 und der Ventilkegel 24 innerhalb des Ventilinnengehäuses 21 verschiebbar angeordnet.

Der Überlast-Einleitungskanal 31 ist durch den Ventil-Steuerkolben 25 verdeckbar. Der Ventil-Steuerkolben 25 und der Ventilkegel 24 ist starr mit der Ventilstange 23 miteinander verbunden. Das bedeutet, dass der Abstand zwischen dem Ventil-Steuerkolben 25 und dem Ventilkegel 24 nicht veränderbar ist. In alternativen Ausführungsformen wird der Abstand zwischen dem Ventil-Steuerkolben 25 und dem Ventilkegel 24 veränderbar ausgeführt. Dazu müssen im Grunde zwei Ventilstangen innerhalb des Ventilinnengehäuses angeordnet werden, wobei eine Ventilstange für die Bewegung des Ventilkegels und die andere Ventilstange für die Bewegung des Ventil-Steuerkolbens zuständig ist. Durch die Möglichkeit der getrennten Bewegungen des Ventilkegels als auch des Ventil-Steuerkolbens ist es möglich, auch bei geschlossenem Ventil, d. h. der Ventilkegel liegt am Ventilsitz 27 an, eine Öffnung zu schaffen zu der Überlast-Einleitung.

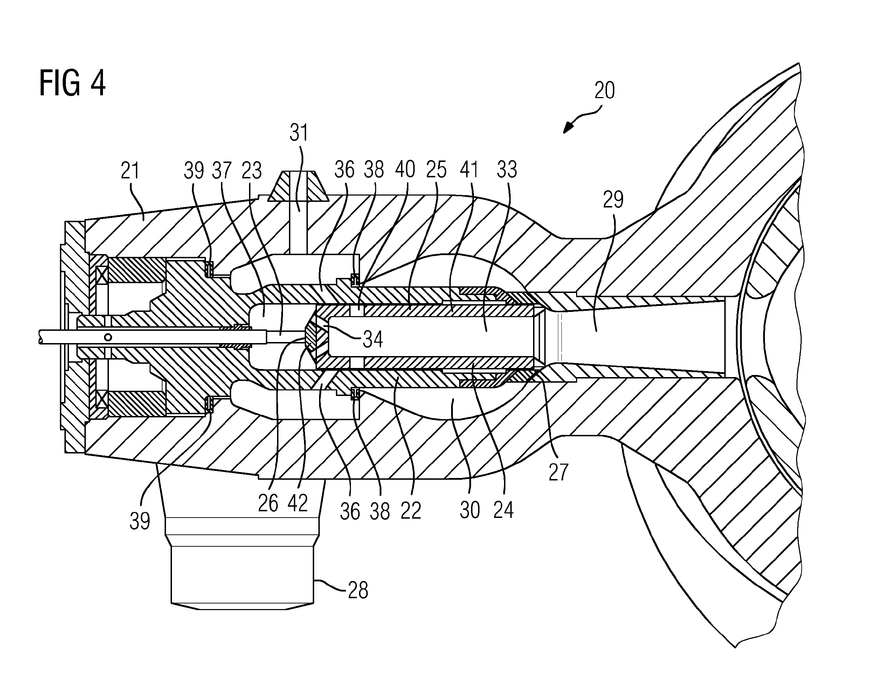

In der FIG 4 ist eine alternative Ausführungsform des Ventils dargestellt. Der Unterschied zu der Ausführungsform gemäß der FIG 2 und der FIG 3 besteht darin, dass der Ventil-Steuerkolben 25 nun integral mit dem Ventilkegel 24 ausgebildet ist. Das bedeutet, dass der Ventilkegel 24 im Grunde verlängert ausgeführt ist und eine Durchströmöffnung 40 aufweist, die die strömungstechnische Verbindung zwischen der Dampfauslass-Öffnung 29 und der Überlast-Einleitungs-Öffnung 31 herstellt. In der FIG 4 ist der Ventilkegel 24 und der Ventil-Steuerkolben 25 im geschlossenen Zustand dargestellt. Das bedeutet, dass der Ventilkegel 24 am Ventilsitz 27 ansitzt und der Ventilkegel 24 den Überlast-Einleitungskanal 36 verdeckt. Die Durchströmöffnungen 40 sind somit in der Darstellung gemäß FIG 4 rechts von dem Überlast-Einleitungskanal 36 angeordnet.

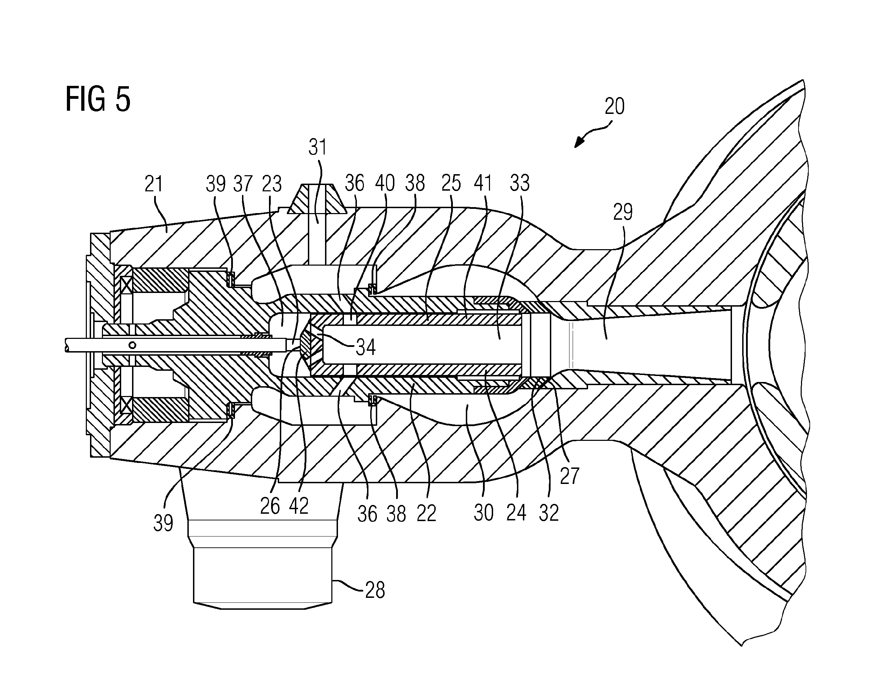

In der FIG 5 ist das Ventil in geöffnetem Zustand dargestellt. Das bedeutet, dass der Ventilkegel 24 und der Ventil-Steuerkolben 25 nunmehr derart angeordnet ist, dass eine strömungstechnische Verbindung zwischen der Durchströmöffnung 40 und dem Überlast-Einleitungskanal 36 möglich ist. Somit strömt dann Dampf aus dem zweiten Raum 33 über die Durchströmöffnung 40 in die Überlast-Einleitungs-Öffnung 31. In der Ausführungsform gemäß FIG 4 und FIG 5 existiert dem Grunde nach kein Zwischenraum 35. Im Grunde wird in der Ausführungsform gemäß FIG 4 und FIG 5 der Zwischenraum 35 durch die Durchströmöffnung 40 ersetzt, die sich im Ventilkegel 24 befindet. Der Ventilkegel 24 ist hierbei rotationssymmetrisch ausgeführt, wobei im Wesentlichen der Ventilkegel 24 einen Rohrmantel 41 und einen Abschlussdeckel 42 umfasst. In dem Abschlussdeckel 42 ist der Ventilkolbenkanal 34 angeordnet. Im Rohrmantel 41 ist die Durchströmöffnung 40 angeordnet.

Das gesamte Ventil 20 kann hierbei als Regelventil ausgebildet sein.

## Patentansprüche

1. Ventil (20) für eine Dampfturbine
umfassend
ein Ventilgehäuse (21),
ein Ventilinnengehäuse (22),
eine Ventilstange (23),
einen Ventilkegel (24),
einen Ventil-Steuerkolben (25),
wobei das Ventilinnengehäuse (22) innerhalb des Ventilgehäuses (21) angeordnet ist,
wobei der Ventilkegel (24) mit einer Endseite (26) der Ventilstange (23) verbunden ist,
wobei auf der Ventilstange (23) der Ventil-Steuerkolben (25) angeordnet ist,
wobei der Ventilkegel (24) verschiebbar gegenüber einem im Ventilgehäuse (21) angeordneten Ventilsitz (27) ausgebildet ist,
wobei das Ventilgehäuse (21) eine Dampfeinlass-Öffnung (28) und eine Dampfauslass-Öffnung (29) aufweist,
wobei die Dampfeinlass-Öffnung (28) und die Dampfauslass-Öffnung (29) strömungstechnisch miteinander verbunden ist und der Ventilkegel (24) und der Ventilsitz (27) derart ausgebildet sind, dass die strömungstechnische Verbindung zwischen der Dampfeinlass-Öffnung (28) und der Dampfauslass-Öffnung (29) trennbar ist,
wobei das Ventilgehäuse (21) eine Überlast-Einleitungs-Öffnung aufweist (31), die strömungstechnisch mit der Dampfeinlass-Öffnung (28) verbunden ist,
wobei der Ventil-Steuerkolben (25) und das Ventilinnengehäuse (22) derart ausgebildet sind, dass die strömungstechnische Verbindung zwischen der Überlast-Einleitungs-Öffnung (31) und der Dampfeinlass-Öffnung (28) trennbar ist.

2. Ventil nach Anspruch 1,
wobei das Ventil (20) derart ausgebildet ist, dass die strömungstechnische Verbindung zwischen der Dampfeinlass-Öffnung (28) und der Überlast-Einleitungs-Öffnung (31) dann besteht, wenn die strömungstechnische Verbindung zwischen der Dampfeinlass-Öffnung (28) und der Dampfauslass-Öffnung (29) besteht.

3. Ventil nach Anspruch 1 oder 2,
wobei die Ventilstange (23), der Ventil-Steuerkolben (25) und der Ventilkegel (24) innerhalb des Ventilinnengehäuses (22) verschiebbar angeordnet sind.

4. Ventil nach einem der vorhergehenden Ansprüche,
wobei im Ventilinnengehäuse (22) ein Überlast-Einleitungskanal (36) angeordnet ist, der durch den Ventil-Steuerkolben (25) verdeckbar ist.

5. Ventil nach einem der vorhergehenden Ansprüche,
wobei der Ventil-Steuerkolben (25) und der Ventilkegel (24) starr mit der Ventilstange (23) verbunden sind.

6. Ventil nach einem der vorhergehenden Ansprüche,
wobei zwischen dem Ventil-Steuerkolben (25) und dem Ventilkegel (24) ein Zwischenraum (35) angeordnet ist, der strömungstechnisch über einen im Ventilkolben angeordneten Ventilkolbenkanal (34) verbunden ist,
wobei der Ventilkolbenkanal (34) mit der Dampfauslass-Öffnung (29) strömungstechnisch verbunden ist.

7. Ventil nach einem der Ansprüche 1 bis 5,
wobei der Ventil-Steuerkolben (25) integral mit dem Ventilkolben ausgebildet ist.

8. Ventil nach Anspruch 7,
wobei der Ventilkolben Durchströmöffnungen (40) aufweist, die die strömungstechnische Verbindung zwischen der Dampfauslass-Öffnung (29) und dem Überlast-Einleitungskanal (36) herstellt.

9. Ventil nach einem der vorhergehenden Ansprüche,
wobei das Ventilinnengehäuse (22) dampfdicht an das Ventilgehäuse (21) angeordnet ist.

10. Ventil nach einem der vorhergehenden Ansprüche,
wobei das Ventil (20) als ein Regelventil ausgebildet ist.
